Europäisches Patentamt

European Patent Office

Office européen des brevets

(19)

(11) EP 0 768 789 A2

(12) EUROPÄISCHE PATENTANMELDUNG

(43) Veröffentlichungstag:
16.04.1997 Patentblatt 1997/16

(51) Int Cl.⁶: H04M 9/08

(21) Anmeldenummer: 96440077.4

(22) Anmeldetag: 07.10.1996

(84) Benannte Vertragsstaaten:
AT BE CH DE ES FR GB IT LI NL SE

(30) Priorität: 13.10.1995 DE 19538187

(71) Anmelder: ALCATEL ALSTHOM COMPAGNIE
GENERALE D'ELECTRICITE
75008 Paris (FR)

(72) Erfinder:
• Rozinaj, Gregor, Dr.
70569 Stuttgart (DE)
• Fesseler, Peter
70469 Stuttgart (DE)

(74) Vertreter: Müller, Joachim, Dipl.-Ing. et al
Alcatel Alsthom
Intellectual Property Department,
Postfach 30 09 29
70449 Stuttgart (DE)

(54) **Verfahren und Schaltungsanordnung zur Detektion von Sprache eines fernen Sprechers in einem Fernsprechendgerät**

(57) In Kommunikationsnetzen mit Übertragungseinrichtungen in analoger Schaltungstechnik gelangt ein Teil der Sprache eines lokalen Sprechers aufgrund nicht angepaßter 4 Draht/2 Drahtübergänge als Leitungsecho zum lokalen Sprecher zurück. Diese Leitungsechos werden durch Echokompensatoren unwirksam gemacht. Die Aktualisierung der Filterkoeffizienten der Echokompensatoren darf jedoch nur erfolgen, wenn Leitungsechos empfangen werden, bei Empfang von Sprache des fernen Sprechers muß eine Neuberechnung der Filterkoeffizienten ausgeschlossen werden.

Allgemein bekannt sind Detektionsmöglichkeiten der Sprache eines lokalen Sprechers. Erfindungsgemäß wird die Detektion der Sprache eines fernen Sprechers auf eine Dämpfungsmessung der Übertragungsstrecke zurückgeführt, wobei empfangene Sprache eine Verringerung der Dämpfung vortäuscht. Aus der Differenz aus Langzeitmittelwert ($Aa(k+1)$) und Kurzzeitmittelwert ($A(k+1)$) der Dämpfung wird sehr schnell durch Vergleich mit einem Schwellwert ($THRe$) ermittelt, ob Sprache vorliegt oder nicht. Das Verfahren ist auch anwendbar, um durch Gegensprechen eine automatische Sprachausgabe auf der lokalen Seite abzubrechen.

Fig.1

**Beschreibung**

Die Erfindung betrifft ein Verfahren und eine Schaltungsanordnung zur Detektion von Sprache in einem Fernsprechendgerät von einem am fernen Ende einer Übertragungsstrecke eines Kommunikationssystems befindlichen Sprechers. Die Detektion von Sprache ist beispielsweise Voraussetzung für eine korrekte Bestimmung der Übertragungsfunktion eines Echokompensators in einer Freisprecheinrichtung eines Fernsprechendgerätes.

Ein wesentliches Problem bei Freisprecheinrichtungen resultiert aus der akustischen Kopplung zwischen Lautsprecher und Mikrofon des Fernsprechendgerätes, wenn ein Teil des vom Lautsprecher abgegebenen Empfangssignals über die Luftstrecke und gegebenenfalls über ein Gehäuse zum Mikrofon und somit zum Sprecher an dem fernen Ende der Übertragungsstrecke zurückgelangt. Das Signal wird dort als störendes Echo, im folgenden als lokales Echo bezeichnet, wahrgenommen, wenn die Intensität und die Laufzeit bestimmte Grenzen überschreiten.

In Kommunikationsnetzen, in denen sowohl Übertragungseinrichtungen in digitaler Technik als auch in analoger Technik eingesetzt werden, treten 4 Draht/ 2 Draht-Übergänge auf, die mit Gabelschaltungen realisiert werden und bei denen eine Fehlanpassung technisch nicht vermieden werden kann. Diese Fehlanpassungen führen zu Signalreflexionen auf der Übertragungsstrecke, so daß der lokale Sprecher Echos, im folgenden als Leitungsecho bezeichnet, wahrnimmt, die bei entsprechender Intensität und Verzögerung gegenüber dem gesendeten Signal sich sehr störend bei einem Gespräch auswirken.

Es ist grundsätzlich bekannt, die Wirkung störender Echos durch Echokompensatoren zu beseitigen, vgl. R. Wehrmann u.a. "Signalverarbeitungsverfahren zur Verbesserung der Sprachkommunikation über Freisprecheinrichtungen; Der Fernmelde-Ingenieur, 48. Jahrgang, Oktober 1994, Seite 27-28. Ausgehend von der Erkenntnis, daß die Ursache des lokalen Echos die akustische Kopplung zwischen Lautsprecher und Mikrofon ist und daß die Ursache des Leitungsechos die elektrische Kopplung zwischen einer Leitung in Senderichtung und einer Leitung in Empfangsrichtung ist, wird angestrebt, mit einem Echokompensator jeweils die Übertragungsfunktion des realen Systems Lautsprecher-Mikrofon oder Leitung-Leitung nachzubilden. Das beim Teilnehmer eintreffende Signal durchläuft dann sowohl das reale als auch das durch den Echokompensator nachgebildete System. Anschließend wird das Ausgangssignal des Echokompensators vom echobehafteten Signal des realen Systems subtrahiert, so daß somit das Echo weitgehend kompensiert wird.

Zur Realisierung von Echokompensatoren werden digitale Filter eingesetzt, deren Filterkoeffizienten beispielsweise nach dem Normalized Least Mean Square Algorithmus, kurz NLMS-Algorithmus, bestimmt werden können, vgl. T. Huhn, H.-J. Jentschel: Kombination von Geräuschredution und Echokompensation beim Freisprechen; Nachrichtentechnik, Elektronik, Berlin 43 (1993), Seite 274-280. Die Schwierigkeit bei der Bestimmung der Filterkoeffizienten besteht darin, die aktuelle Impulsantwort des nachgebildeten Systems nur bei Vorhandensein eines Echos zu bestimmen. So besteht die Forderung, sehr zuverlässig zu unterscheiden zwischen lokalen Echos und lokalen Geräuschen oder aktivem lokalen Sprecher und zwischen Leitungsechos und aktivem fernen Sprecher, um Filterkoeffizienten nur bei schweigendem lokalen Sprecher und schweigendem fernen Sprecher zu bestimmen, weil dann im wesentlichen nur Echosignale empfangen werden.

Es ist bekannt, zur Spracherkennung eines lokalen Sprechers eine Vergleichsschaltung einzusetzen, die Eingangssignale, welche über einem Referenzpegel liegen, als Sprache deklariert, vgl. DE-OS 2 137 127. Fällt die Eingangsspannung unter diesen Pegel ab, wird eine Sprachpause angenommen. Eine solche Methode ist zwar zur Detektion eines aktiven lokalen Sprechers geeignet, sie führt aber zu keinem brauchbaren Ergebnis bei der Detektion eines aktiven fernen Sprechers. So ist beim Gegensprechen und bei geringer Lautstärke des fernen Sprechers eine eindeutige Unterscheidung zwischen Sprache und Leitungsecho beim Empfangssignal mittels einer festen Schwelle als Unterscheidungsmerkmal nicht möglich.

Daraus resultiert die Aufgabe, ein Verfahren zur Detektion von Sprache eines am fernen Ende einer Übertragungsstrecke befindlichen Sprechers anzugeben, mit dem in der Freisprecheinrichtung eines Fernsprechendgerätes am Anfang der Übertragungsstrecke schnell und zuverlässig zwischen Sprache des fernen Sprechers und Echo des lokalen Sprechers unterschieden werden kann.

Diese Aufgabe wird erfindungsgemäß durch das im ersten Patentanspruch beschriebene Verfahren und durch die im vierten Patentanspruch beschriebene Schaltungsanordnung gelöst.

Das Wesen der Erfindung besteht darin, daß die Detektion der Sprachphasen des fernen Sprechers auf eine Dämpfungsmessung zurückgeführt wird, die vorteilhafterweise nach wenigen Abtastwerten des Sendesignals und des Empfangssignals ein präzises Ergebnis liefert.

Die Erfindung wird nachstehend an einem Ausführungsbeispiel erläutert. In der dazugehörigen Zeichnung zeigen:

Fig. 1     ein Funktionsschaltbild der erfindungsgemäßen Schaltungsanordnung zum Einsatz für einen Echokompensator und

Fig. 2     ein Funktionsschaltbild der erfindungsgemäßen Schaltungsanordnung zum Einsatz für eine Sprachausgabeeinrichtung.

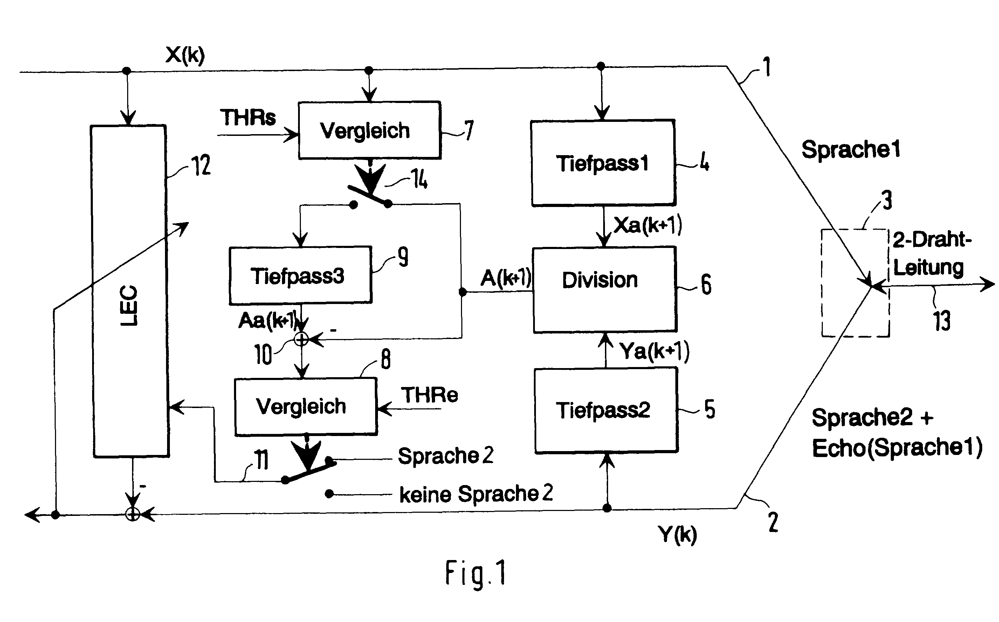

Gemäß Fig. 1 ist die erfindungsgemäße Schaltungsanordnung in einem Fernsprechendgerät zwischen einer Leitung 1 in Senderichtung und einer Leitung 2 in Empfangsrichtung angeordnet. Die Leitung 1 in Senderichtung und die Leitung 2 in Empfangsrichtung führen über eine 4 Draht/2 Draht-Gabelschaltung 3 zum Sprecher am fernen Ende der Übertragungsstrecke. Die erfindungsgemäße Schaltungsanordnung besteht im wesentlichen aus einem ersten Mittelwertbildner 4, einem zweiten Mittelwertbildner 5 und einem Quotientenbildner 6 sowie aus einem ersten Vergleicher 7, einem zweiten Vergleicher 8 und einem dritten Mittelwertbildner 10. Der Ausgang 11 der Schaltungsanordnung ist mit einem Echokompensator 12 verbunden.

Soweit zum Verständnis der erfinderischen Lösung erforderlich, ist die Übertragungsstrecke zum fernen Sprecher durch eine Zweidrahtleitung 13 angedeutet. Vom lokalen Sprecher wird seine Sprache 1 über die Leitung 1 in Senderichtung zum fernen Sprecher gesendet. Über die Leitung 2 in Empfangsrichtung wird das von der Sprache 1 des lokalen Sprechers herrührende Echo empfangen und/oder die Sprache 2 des fernen Sprechers.

Die Funktion der Schaltungsanordnung und die einzelnen Schritte des Verfahrens werden im folgenden beschrieben. Zunächst wird die Dämpfung der Übertragungsstrecke zwischen Mikrofonausgang und Lautsprechereingang aus der Sprache 1 des lokalen Sprechers oder aus einem Umgebungsgeräusch der lokalen Seite und dem von der Sprache 1 des lokalen Sprechers oder dem Umgebungsgeräusch herrührenden Echos bestimmt. Diese Dämpfung ist im allgemeinen konstant. Bei einem natürlichen Dialog zwischen lokalem Sprecher und fernem Sprecher, bei dem auch Phasen des Gegensprechens auftreten, besteht das auf der Leitung 2 in Empfangsrichtung empfangene Signal aus der Überlagerung von Echos und der Sprache 2 des fernen Sprechers, so daß eine Messung der Dämpfung unter diesen Bedingungen dann einen geringeren Wert ergibt. Diese voneinander abweichenden Meßwerte sind die Grundlage für das erfindungsgemäße Verfahren.

Zur Bestimmung der Dämpfung wird aus dem Abtastwert des Sendesignals X(k) mit dem ersten Mittelwertbildner 4 ein Mittelwert Xa(k+1) bestimmt. Um Fehlmessungen auszuschließen, muß sichergestellt werden, daß ein auswertbares Sendesignal X(k) vorhanden ist. Dazu wird der Wert des Sendesignals X(k) mit einem Schwellwert THRs in der ersten Vergleichsschaltung 7 verglichen und die Auswertung der Meßergebnisse 14 wird zugelassen, wenn der Schwellwert THRs vom Wert des Sendesignals X(k) überschritten wird. Die Mittelwertbildung wird beispielsweise von einem Infinite Impulse Response-Tiefpaß, IIR-Tiefpaß, nach folgender Vorschrift vorgenommen:

$$Xa(k+1) = Xa(k) + \frac{X(k) + Xa(k)}{M}$$

$$= Xa(k) + \frac{X(k)}{M} + \frac{Xa(k)}{M}$$

$$= (1 - \frac{1}{M}) \, Xa(k) + \frac{1}{M} \cdot X(k) \qquad\qquad (1)$$

$$1 - \frac{1}{M} = B1 \qquad \frac{1}{M} = A1$$

$$A1 = 1 - B1$$

Dabei bedeuten:

Xa(k+1)    Zum Berechnungszeitpunkt vorliegender Ausgangswert des Tiefpasses.

Xa(k)    gültiger Ausgangswert des Tiefpasses vor dem Berechnungszeitpunkt.

X(k)    aktueller Eingangswert des Tiefpasses.

B1    Zeitkonstante des Tiefpasses.

Nach gleicher Vorschrift wird der Mittelwert aus den Abtastsignalen Y(k) des empfangenen Signals, das von dem Echo des gesendeten Signals herrührt, mit dem zweiten Mittelwertbildner 5 ermittelt.

$$Ya(k+1) = (1 - \frac{1}{M})\, Ya(k) + \frac{1}{M}\, Y(k) \qquad (2)$$

Aus dem Quotienten der Ergebnisse der Gleichungen (1) und (2) wird mittels des Quotientenbildners 6 ein Kurzzeitmittelwert A(k+1) der Dämpfung der Übertragungsstrecke ermittelt.

$$A(k+1) = \frac{Xa(k+1)}{Ya(k+1)} \qquad (3)$$

Falls ein geeigneter Abtastwert X(k) des Sendesignals vorliegt, wird durch den dritten Mittelwertbildner 9 ein Langzeitmittelwert Aa(k+1) der Dämpfung aus dem Kurzzeitmittelwert Aa(k+1) nach folgender Vorschrift gebildet:

$$Aa(k+1) = (1 - \frac{1}{N})\, Aa(k) + \frac{1}{N}\, A(k) \qquad (3)$$

mit

$$1 - \frac{1}{N} = B2 \qquad \frac{1}{N} = A1$$

wobei die Zeitkonstante B2 > B1 ist.

Die Differenz aus Langzeitmittelwert der Dämpfung Aa(k+1) und Kurzzeitmittelwert der Dämpfung A(k+1), gebildet in einer Summierschaltung 10, wird nunmehr mittels der zweiten Vergleichsschaltung 8 mit einem Schwellwert THRe verglichen. Ist die Differenz Aa(k+1) - A(k+1) größer als der Schwellwert THRe, so wird das Empfangssignal von der Sprache 2 des Sprechers am fernen Ende der Übertragungsstrecke gebildet, ist die Differenz Aa(k+1) - A(k+1) kleiner als der Schwellwert THRe, so wird das Empfangssignal von einem Echo des Sendesignals gebildet. Da die Dämpfung der Übertragungsstrecke im wesentlichen konstant ist, weichen bei Vorliegen eines Echos die gemessenen Kurzzeitmittelwerte der Dämpfung A(k+1) gar nicht oder nur wenig voneinander ab, so daß der Langzeitmittelwert Aa(k+1) etwa gleich dem Kurzzeitmittelwert A(k+1) wird. Die Differenz aus Langzeitmittelwert Aa(k+1) und Kurzzeitmittelwert A(k+1) ist bei einem Echo sehr stabil und relativ klein und somit kleiner als der Schwellwert THRe.

Wird das Empfangssignal hingegen von der Sprache 2 des fernen Sprechers gebildet, so wird von den Abtastwerten Y(k) eine gegenüber der tatsächlich vorhandenen Dämpfung kleinere Dämpfung vorgetäuscht, somit wird der Kurzzeitmittelwert der Dämpfung A(k+1) einerseits kleiner und andererseits ändern sich die Kurzzeitmittelwerte infolge der im Vergleich zum Echo größeren Dynamik der Sprache. Die Dynamik der Sprache führt zu einem im Vergleich zu den Kurzzeitmittelwerten der Dämpfung A(k+1) größeren Langzeitmittelwert der Dämpfung Aa(k+1) und somit zu einer größeren Differenz zwischen Langzeitmittelwert und Kurzzeitmittelwert, die dann über dem Schwellwert THRe liegt.

Das Verfahren gestattet somit, die Sprache 2 des fernen Sprechers zu detektieren und in diesem Fall die Aktualisierung der Koeffizienten des FIR-Filters im Echokompensator 12 zu unterbinden. Diese Aktualisierung erfolgt, wenn tatsächlich nur ein Echo empfangen wird. Sollten die gemessenen Dämpfungswerte schwanken, beispielsweise durch Störsignale auf der Empfangsleitung, so wird die Aktualisierung der Filterkoeffizienten unterbrochen.

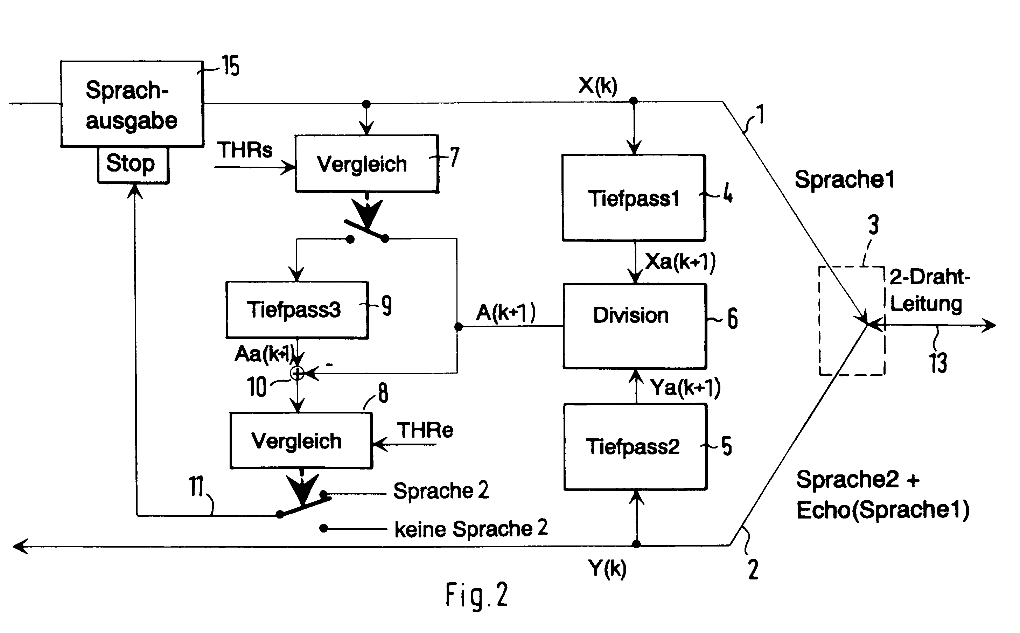

Fig. 2 zeigt im wesentlichen die gleiche Schaltungsanordnung wie Fig. 1, nur wird hier die detektierte Sprache 2 des fernen Sprechers dazu verwendet, um eine Sprachausgabe 15 auf der lokalen Seite zu unterbrechen.

Das ist dann von praktischem Nutzen, wenn der ferne Sprecher beispielsweise einen Ansagetext eines automatischen Anrufbeantworters hört, den er bei Bedarf durch Gegensprechen abbrechen kann.

Im Vergleich zum Stand der Technik läßt sich mit dem erfindungsgemäßen Verfahren und der dazugehörigen Schaltungsanordnung vorteilhafterweise sehr schnell, beispielsweise in weniger als 5ms, Sprache vom fernen Sprecher detektieren, so daß somit Fehleinstellungen des Echokompensators 12 vermieden werden können. Die Schaltungsanordnung ist mit sehr geringem Aufwand zu realisieren.

**Patentansprüche**

1. Verfahren zur Detektion von Sprache in einem Fernsprechendgerät von einem am fernen Ende einer Übertragungsstrecke eines Kommunikationssystems befindlichen Sprechers, dessen akustoelektrisch gewandelten und codierten Signale (Y(k)) über eine Leitung in Empfangsrichtung (2) von dem Fernsprechendgerät empfangen werden und von dem von einem lokalen Sprecher oder von Umgebungsgeräuschen herrührende akustoelektrisch gewandelte und codierte Signale (X(k)) über eine Leitung in Senderichtung (1) in Richtung des Sprechers am fernen Ende der Übertragungsstrecke gesendet werden, **dadurch gekennzeichnet**, daß

- aus den Abtastwerten des vom Fernsprechendgerät gesendeten Signals (X(k)) ein Mittelwert (Xa(k+1)) gebildet wird,

- aus den Abtastwerten des vom Fernsprechendgerät empfangenen Signals (Y(k)) ein Mittelwert (Ya(k+1)) gebildet wird,

- aus dem Mittelwert (Xa(k+1)) des gesendeten Signals (X(k)) und dem Mittelwert (Ya(k+1)) des empfangenen Signals (Y(k)) ein Quotient (A(k+1)) gebildet wird, der einen Kurzzeitmittelwert der Dämpfung der Übertragungsstrecke darstellt,

- aus den Quotienten (A(k+1)) ein Mittelwert (Aa(k+1)) gebildet wird, der einen Langzeitmittelwert der Dämpfung der Übertragungsstrecke darstellt,

- eine Differenz aus dem Langzeitmittelwert (Aa(k+1)) der Dämpfung und dem Kurzzeitmittelwert (A(k+1)) der Dämpfung gebildet und mit einem Schwellwert (THRe) verglichen wird und das Vergleichsergebnis angibt, daß das empfangene Signal (Y(k)) von einem Leitungsecho herrührt, wenn die Differenz kleiner als der Schwellwert (THRe) ist und daß das empfangene Signal (Y(k)) von der Sprache des fernen Sprechers herrührt, wenn die Differenz größer als der Schwellwert (THRe) ist.

2. Verfahren nach Anspruch 1, dadurch gekennzeichnet, daß in den Zeitabschnitten, in denen die Differenz aus dem Langzeitmittelwert (Aa(k+1)) und dem Kurzzeitmittelwert (A(k+1)) der Dämpfung kleiner als der Schwellwert (THRe) ist, die Filterkoeffizienten eines digitalen Filters aktualisiert werden.

3. Verfahren nach Anspruch 1, dadurch gekennzeichnet, daß das Vergleichsergebnis für den Fall, daß die Differenz aus dem Langzeitmittelwert (Aa(k+1)) und dem Kurzzeitmittelwert (A(k+1)) der Dämpfung größer als der Schwellwert (THRe) ist, dazu verwendet wird, die Sendung einer automatischen Sprachausgabeeinrichtung (15) zu unterbrechen.

4. Schaltungsanordnung zur Durchführung des Verfahrens in einem Fernsprechendgerät mit einer Leitung in Senderichtung (1) und einer Leitung in Empfangsrichtung (2) dadurch gekennzeichnet, daß die Leitung in Senderichtung (1) mit dem Eingang eines ersten Mittelwertbildners (4) und die Leitung in Empfangsrichtung (2) mit dem Eingang eines zweiten Mittelwertbildners (5) verbunden ist, deren Ausgänge an die Eingänge eines Quotientenbildners (6) geschaltet sind, dessen Ausgang sowohl über einen von einer ersten Vergleichsschaltung (7) gesteuerten Schalter (14) an den Eingang eines dritten Mittelwertbildners (9) als auch über eine Summierschaltung (10) an den Eingang einer zweiten Vergleichsschaltung (8) geschaltet ist, daß der Eingang der ersten Vergleichsschaltung (7) mit der Leitung in Senderichtung (1) verbunden ist, daß der Ausgang des dritten Mittelwertbildners (9) an die Summierschaltung (10) geschaltet ist und daß der Ausgang der zweiten Vergleichsschaltung (8) Ausgang (11) der Schaltungsanordnung ist, an dem ein Signal angibt, ob der ferne Sprecher spricht oder schweigt.

5. Schaltungsanordnung nach Anspruch 4, dadurch gekennzeichnet, daß die Zeitkonstante des ersten und des zweiten Mittelwertbildners (4, 5) kleiner ist als die Zeitkonstante des dritten Mittelwertbildners (9).

Fig.1

Fig.2